# EUROPEAN PATENT SPECIFICATION

(11) **EP 0 457 602 B1**
(45) Date of publication and mention of the grant of the patent: **30.07.1997**
(21) Application number: 91304443.4
(22) Date of filing: 17.05.1991
(51) Int. Cl.: H04L 5/06, H04J 9/00

(54) **Data security in multi-carrier communication systems**
Datensicherheit in Mehrträger-Nachrichtensystemen
Sécurité de données dans des systèmes de communication à plusieurs porteuses

(30) Priority: 17.05.1990 JP 127606/90
(43) Date of publication of application: 21.11.1991
(73) Proprietor: FUJITSU LIMITED, Kawasaki-shi, Kanagawa 211 (JP)
(72) Inventor: Hinokimoto, Shinichi, Hachioji-shi, Tokyo 192-03 (JP)
(74) Representative: Fane, Christopher Robin King

(56) References cited:
- WO-A-86/07223
- US-A- 4 924 516
- IEEE COMMUNICATIONS MAGAZINE vol. 28, no. 5, May 1990, Piscataway, NJ, US, pp. 5-14; BINGHAM: 'Multicarrier modulation for data transmission: an idea whose time has come'

## Description

The present invention relates to data security in multi-carrier communication systems wherein a plurality of carriers each having a different frequency are concurrently used for transmitting data.

WO-A-86/07223 describes multi-carrier communications apparatus which may be considered to include respective transmitter and receiver units connected together by way of a communications link so that digital data can be transmitted from the transmitter unit to the receiver unit when the apparatus is in use. The said transmitter unit includes modulation circuitry connected for receiving such data and operable to modulate respective different carrier signals with respective individual groups of data bits, each such group being made up of an individually selected number of bits of the received digital data determined by selectively variable control information stored in the transmitter unit, and to output the modulated carrier signals to one end of the said communications link; and the said receiver unit has an input connected to the other end of the said communications link and includes demodulation circuitry operable to derive, from the said modulated carrier signals, respective groups of data bits, each such derived group being made up of an individually preset number of bits determined by selectively variable control information stored in the receiver unit. The said transmitter and receiver units are operable in an initialization mode wherein initialization information is transmitted from the receiver unit to the transmitter unit, by way of the said communications link, to bring the said control information stored in the transmitter unit and the control information stored in the said receiver unit into accordance with one another so as to ensure that the data bit groups derived by the said demodulation circuitry correspond respectively to the said individual groups of data bits.

A facsimile communication system using a public analog telephone line, is one application of such a multi-carrier communication system. When the multi-carrier communication system is applied in the facsimile communication system, a plurality of carriers each having a different frequency within a voice frequency band are concurrently used for transmitting data. A certain number of data bits are assigned to each of the plurality of carriers for transmitting data. The numbers which are assigned to the respective carriers are determined so that a predetermined error rate is expected in respective channels using the carriers in a receiver side. The numbers are determined at a beginning stage of each transmission process based on the quality of the public analog telephone line by monitoring a received signal for a noise level and distortion which are included in the received signal. The assigned numbers are informed to the sender side, and then data transmission using the assigned numbers is commenced. The techniques for determining the above assignment are disclosed in "Multicarrier Modulation for Data Transmission: An Idea Whose Time has Come" John A. C. Bingham, IEEE Communication Magazine, May 1990, and U.S. Patents of D. Hughes-Hartogs Nos. 4,679,227 (July 7, 1987), 4,731,816 (March 15, 1988), and 4,833,706 (May 23, 1989). For example, about four hundred channels can be established in a practical transmission band of 300 to 3400 Hz. A bit rate of 18Kbps is realised when the quality of the transmission line is in a best condition.

On the other hand, facsimile communication systems are widely spread, and very important information is often transmitted through these facsimile communication systems. However, there is a risk of the transmitted information being wiretapped because it is easy for a corporate spy to obtain and regenerate transmitted information by wiretapping.

Although, conventionally, a cipher apparatus (cryptograph) for coding data which is to be transmitted, may be provided, the operation of coding data is complicated and therefore, a heavy load is imposed during data transmission for ciphering data. Furthermore, the conventional cipher apparatus is expensive.

According to a first aspect of the present invention there is provided communications apparatus including respective transmitter and receiver units connected together by way of a communications link so that digital data can be transmitted from the transmitter unit to the receiver unit when the apparatus is in use, wherein: the said transmitter unit includes modulation circuitry connected for receiving such data and operable to modulate respective different carrier signals with respective individual groups of data bits, each such group being made up of an individually selected number of bits of the received digital data determined by selectively variable control information stored in the transmitter unit, and to output the modulated carrier signals to one end of the said communications link; and the said receiver unit has an input connected to the other end of the said communications link and includes demodulation circuitry operable to derive, from the said modulated carrier signals, respective groups of data bits, each such derived group being made up of an individually preset number of bits determined by selectively variable control information stored in the receiver unit; the said transmitter and receiver units being operable in an initialization mode wherein initialization information is transmitted from one of those units to the other, by way of the said communications link, to bring the said control information stored in the transmitter unit and the control information stored in the said receiver unit into accordance with one another so as to ensure that the data bit groups derived by the said demodulation circuitry correspond respectively to the said individual groups of data bits; characterised in that the said one of the transmitter and receiver units includes a ciphering device operable, in accordance with a preselected ciphering key stored in that one unit, to modify the said control information stored in that one unit, thereby to produce the said initialization information, and the said other unit includes a deciphering device operable, in accordance with a preselected deciphering key stored therein, to derive from the received initialization information the control information required for that other unit.

Such multi-carrier communication apparatus can prevent wiretapping by simple construction and operation and at a low cost.

In a preferred embodiment the said one unit is the said receiver unit and the said other unit is the said transmitter unit. The said modulation circuitry includes training signal generating means for generating a training signal which is used in place of the said received digital data to modulate the said different carrier signals when the transmitter unit is in the said initialization mode; and the said receiver unit further includes carrier bit assignment means operable, when such a training signal is received from the transmitter unit by way of the said communications link during operation of the receiver unit in the said initialization mode, to evaluate according to quality components of the received training signal that correspond respectively to such different carrier signals, and to employ the results of the evaluation to determine, for each such carrier signal, the number of bits that are to be used by the modulation circuitry in the transmitter unit to form the said individual group of data bits for modulation with the carrier signal concerned.

According to a second aspect of the present invention there is provided a transmitter unit for transmitting digital data via a communications link, including modulation circuitry connected for receiving such data and operable to modulate respective different carrier signals with respective individual groups of data bits, each such group being made up of an individually selected number of bits of the received digital data determined by selectively variable control information stored in the transmitter unit, and to output the modulated carrier signals to one end of the said communications link; the said transmitter unit being operable in an initialization mode wherein initialization information, specifying the number of bits in each such data bit group that is to be used by the modulation circuitry to modulate the carrier signals, is received by the unit, by way of the said communications link, and is employed to set the said control information stored in the transmitter unit such that each such data bit group has the specified number of bits; characterised in that the said transmitter unit is operable to receive the said initialization information from the said communications link in ciphered form and includes a deciphering device operable, in accordance with a preselected deciphering key stored therein, to derive from the received initialization information the said control information required by the unit.

According to a third aspect of the present invention there is provided a receiver unit having an input for connection to one end of a communications link to receive a multi-carrier modulated data signal produced by modulating respective different carrier signals with respective individual groups of bits of digital data to be transmitted, each such group being made up of an individually selected number of bits of the digital data; which receiver unit includes demodulation circuitry operable to derive, from the said modulated carrier signals, respective groups of data bits, each such derived group being made up of an individually preset number of bits determined by selectively variable control information stored in the receiver unit; the said receiver unit being operable in an initialization mode to transmit initialization information, by way of the said communications link , for specifying the number of bits in each such data bit group that is to be used to modulate the carrier signals when producing the said multi-carrier modulated data signal, the specified numbers of bits being in conformity with the said control information stored in the receiver unit so as to ensure that the said derived groups correspond respectively to the data bit groups to be used to modulate the carrier signals; characterised in that the said receiver unit includes a ciphering device operable, in accordance with a preselected ciphering key stored in that unit, to produce the said initialization information by modifying the said control information stored in that unit, so that the said initialization information is transmitted via the said communications link in ciphered form.

Reference will now be made, by way of example, to the accompanying drawings, in which:
Figure 1 is a block diagram of a communication system embodying the present invention;

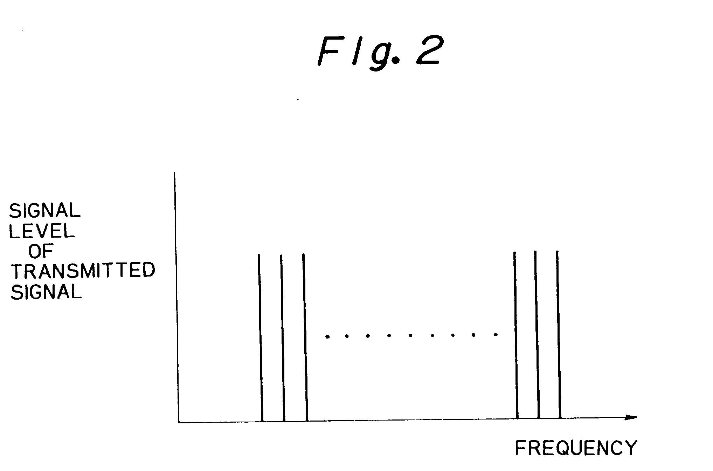

Figure 2 is a graph for illustrating a bit number assignment operation performed by the Fig. 1 system;
Figure 3 is a further graph for illustrating the above operation;
Figure 4 is a diagram for illustrating a sequence of operation of the Fig. 1 system;
Figure 5 is a block diagram of a part of the system of Fig. 1;
Figure 6 is a block diagram of another part of the system of Fig. 1;
Figure 7 is a block diagram of a further part of the system of Fig. 1;
Figure 8A shows an example of a ciphering operation in the Fig. 1 system; and
Figure 8B shows an example of a deciphering operation in the Fig. 1 system.

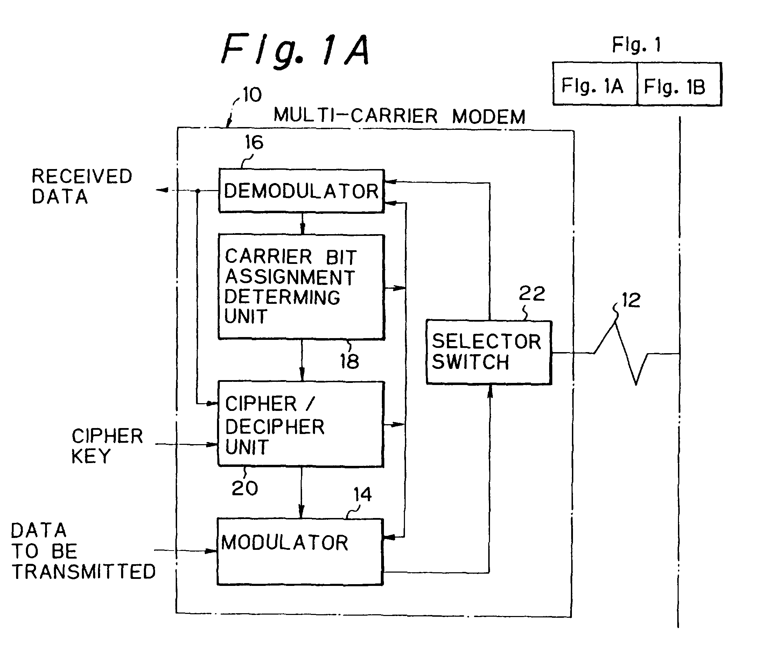

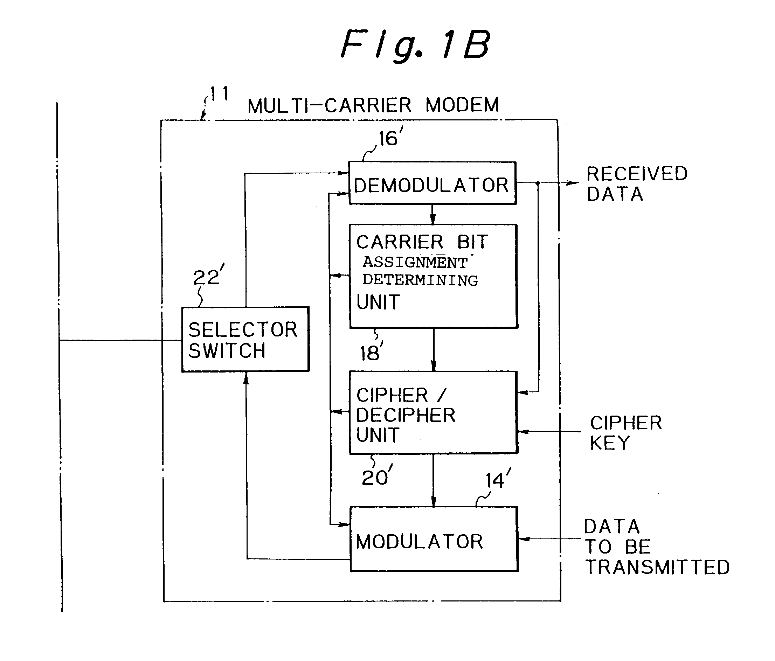

IN the comunication system shown in Fig. 1, reference numerals 10 and 11 each denote a multi-carrier modem, 12 denotes a public analog telephone line (public analog telephone network) providing a communications link, 14 and 14' each denote a modulator, 16 and 16' each denote a demodulator, 18 and 18' each denote a carrier bit assignment determining unit, 20 and 20' each denote a cipher/decipher unit, and 22 and 22' each denote a selector switch.

The multi-carrier modems 10 and 11 are each connected between a data processing portion and the public analog telephone line 12 in a facsimile terminal. A data signal which is to be transmitted from one facsimile terminal to another facsimile terminal through the public analog telephone line (public analog telephone network), is generated in a data processing portion in a sender side. The multi-carrier modem 10, when it is in the sender side (i.e. when used as a transmitter unit), modulates the data signal using a plurality of carriers which are provided within a voice frequency band (300Hz to 3.4KHz), and are arranged so that the frequencies of the carriers are equally spaced. A preset number is assigned to each of the carriers, and the assigned numbers of bits in the data signal are respectively modulated as respective data bit groups with the plurality of carriers in each cycle. Selectively variable control information stored in the transmitter unit determines the assigned numbers to be used by the modulation circuitry 14. The modulation is carried out, for example, in accordance with quadrature amplitude modulation (QAM). In each cycle the resulting modulated signals are summed and transmitted through the public analog telephone line (public analog telephone network) 12 to the other multi-carrier modem 11. The facsimile terminal 11, when it is in the receiver side (i.e. when used as a receiver unit), demodulates the above modulated signal which is transmitted from the sender side, and has the numbers of bits of the data in the respective data bit groups which were respectively modulated with the plurality of carriers by the transmitter unit. The above numbers are preset in the receiver side facsimile terminal (selectively variable control information stored in the receiver unit determines the preset numbers to be used by the demodulation circuitry 16'), and the demodulation is carried out based on the preset numbers. The data bit groups derived by such demodulation correspond respectively to the data bit groups used to carry out the modulation. The demodulated signal is output to a data processing portion in the receiver side facsimile terminal 11.

When the facsimile terminal 10 is in the sender side, the above modulation operation is carried out in the modulator (modulation circuitry) 14 in the multi-carrier modem (transmitter unit) 10, and the output of the modulator 14 is transmitted through the selector switch 22 on the public analog telephone line (public analog telephone network) 12. When the facsimile terminal 11 is in the receiver side, the above demodulation operation is carried out in the demodulator (demodulation circuitry) 16' in the multi-carrier modem (receiver unit) 11, and the modulated signal which is transmitted through the public analog telephone line (public analog telephone network) 12 passes through the selector switch 22' to the demodulator 16'. The function of the selector switches 22 and 22'may each be realized by a hybrid transformer.

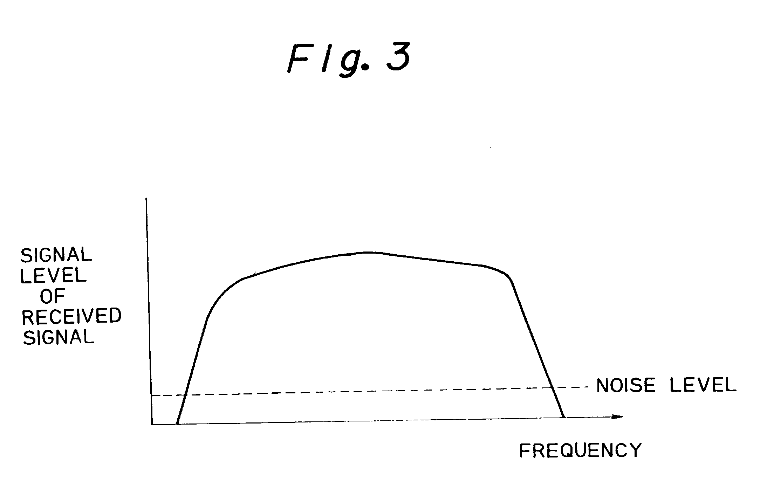

As explained later, before transmitting data, a training signal is transmitted from the sender side to the receiver side. The training signal is modulated with the above plurality of carriers, and the numbers of bits assigned to each carrier are set to a predetermined maximum, as shown in Fiq. 2. The modulated training signal is demodulated by the demodulator 16' in the facsimile terminal 11 in the receiver side, and the demodulated training signal is supplied to the carrier bit assignment determining unit 18'. When receiving the demodulated training signal, the carrier bit assignment determining unit 18 or 18' determines the numbers of bits of the data which are to be modulated with each different carrier in each cycle, by evaluating the quality of different components of the demodulated training signal, which components are respectively modulated with the different carriers, so that a predetermined minimum quality is expected in the following transmission of the data signal. Generally, the signal which is transmitted through the public analog telephone line (public analog telephone network) 12 suffers from noise, attenuation, and distortion, and the noise, attenuation, and distortion vary depending on time and the particular circuit (link) established between the facsimile terminals. Figure 3 shows a general tendency of the attenuation and noise level from which the transmitted signal suffers. Of course, the characteristics of the attenuation and noise level may differ from the characteristics shown in Fig. 3. Therefore, the above determination of the numbers of bits which are assigned to the plurality of carriers is carried out after each establishment of a circuit (link) and before the transmission of real data signals. The operation of the determination is well-known as mentioned before, and is disclosed in "Multicarrier Modulation for Data Transmission: An Idea Whose Time Has Come" John A. C. Bingham, IEEE Communication Magazine, May 1990, and U.S. Patents of D. Hughes-Hartogs Nos. 4,679,227 (July 7, 1987), 4,731,816 (March 15, 1988), and 4,833,706 (May 23, 1989).

In an embodiment of the present invention, the cipher/decipher unit 20' in the facsimile terminal 11 in the receiver side (ciphering device in the receiver unit) ciphers information (control information stored in the receiver unit) on the above numbers which are determined in the carrier bit assignment determining unit 18'. A predetermined cipher key is preset in the cipher/decipher unit 20', and the cipher key is used in the ciphering operation. An example of the ciphering operation is explained later. The ciphered information on the determined numbers is modulated by the modulator 14', and is transmitted as initialization information through the selector switch 22' and the public analog telephone line (public analog telephone network) 12 to the facsimile terminal 10 in the sender side.

In the facsimile terminal 10 in the sender side, the above modulated (and ciphered) information (initialization information) is received through the selector switch 22, and is demodulated by the demodulator 16. The demodulated (and ciphered) information is supplied to the cipher/decipher unit 20 (deciphering device in the transmitter unit). The cipher/decipher unit 20 deciphers the demodulated and ciphered information on the numbers to obtain the above determined numbers (control information required for the transmitter unit). The above predetermined cipher key is preset in the cipher/decipher unit 20, and the cipher key is used in the deciphering operation. It is assumed that the cipher key is predetermined between the sender side and the receiver side. The obtained numbers (control information) are set in the modulator 14 to be used in the modulation of the data signal.

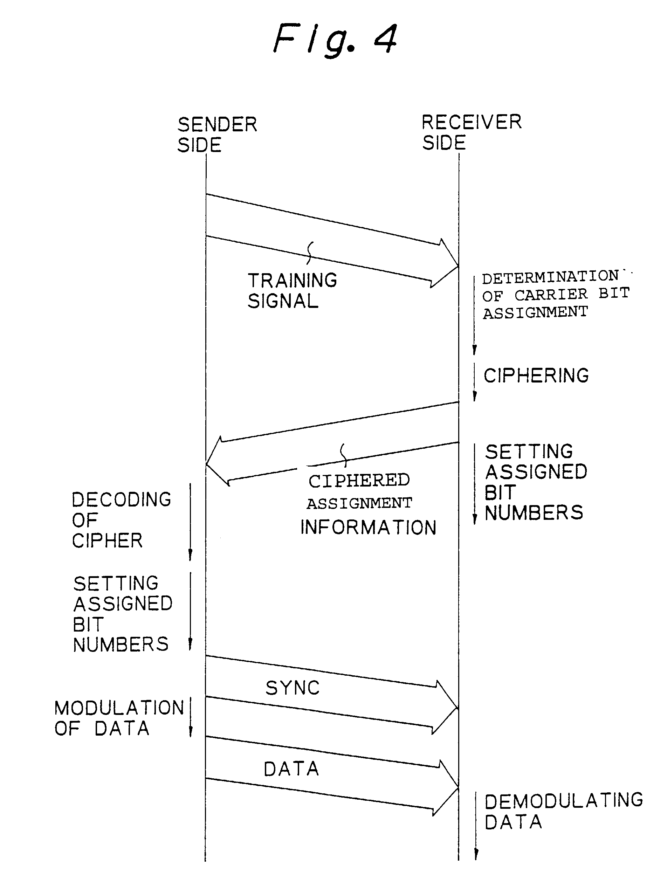

Figure 4 shows a sequence of an operation of data transmission beginning with the above operations in the Fig. 1 system. After the assigned bit numbers (control information) are set in the modulator 14, a synchronization pattern SYNC is transmitted from the sender side to the receiver side, and the real data signal is transmitted.

If the numbers of bits which are assigned to the plurality of carriers are unknown, regeneration (demodulation) of the data signal is impossible, and therefore, wiretapping is prevented. The ciphering operation is carried out only before the data transmission for the information on the numbers assigned to the plurality of carriers, the operation of and the construction for the ciphering is very simple, and the construction is realized with a low cost.

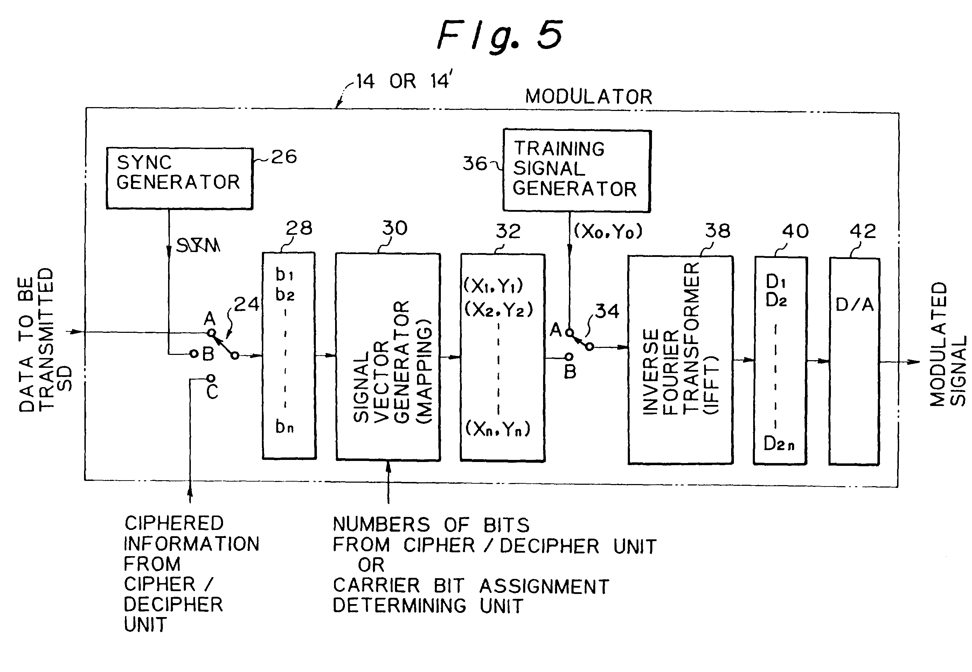

Figure 5 is a block diagram of the modulator in the system of Fig. 1. In Fig. 5, reference numeral 24 denotes a selector switch, 26 denotes a synchronization signal generator, 28 denotes a data buffer, 30 denotes a signal vector generator, 32 denotes a vector buffer, 34 denotes a selector switch, 36 denotes a training signal generator, 38 denotes an inverse Fourier transformer, 40 denotes a time sequence buffer, and 42 denotes a digital to analog converter.

The selector switch 24 receives at its three inputs A, B and C, data SD which is to be transmitted, a synchronization signal SYN from the synchronization signal generator 26, and the ciphered information from the cipher/decipher unit 20 or 20', respectively, and supplies the selected input to the data buffer 28. The data buffer 28 temporarily holds in total a predetermined number of bits bi (i=1 to n) of the above input signal, where each of b1, b2, ... bn denotes a data bit group made up of a set of successive bits of the input signal which are to be modulated with one of the plurality of carriers in one cycle. The predetermined number corresponds to the total number of bits of the input signal that are to be used to modulate the carriers in one cycle of multi-carrier modulation.

Each of the above data bit groups (sets of successive bits) is supplied in turn to the signal vector generator 30. The signal vector generator 30 contains a plurality of mapping circuits (not shown) respectively corresponding to the possible numbers of the bits which may be assigned to the plurality of carriers. Each of the mapping circuits converts its bit group bi (i=1 to n) (i.e. set of successive bits) into a QAM vector (a pair of coordinates) Xi, Yi (i=1 to n). One of the plurality of mapping circuits is selected for each of the plurality of carriers, and the conversion is carried out using the selected mapping circuit. For example, if a data bit group is unused (i.e. if the number of bits in the data bit group is zero), the corresponding carrier is not used; when the number of bits of a data bit group is equal to two, the mapping circuit having four signal points as its output is used: when the number of bits of a data bit group is equal to three, the mapping circuit having 16 signal points as its output is used; when the number of bits of a data bit group is equal to four, the mapping circuit having 32 signal points as its output is used; when the number of bits of a data bit group is equal to five, the mapping circuit having 64 signal points as its output is used; when the number of bits of a data bit group is equal to six, the mapping circuit having 128 signal points as its output is used; and when the number of bits of a data bit group is equal to seven, the mapping circuit having 256 signal points as its output is used. The above selection is controlled by a controller (not shown) based on the preset numbers which are assigned to the plurality of carriers. The numbers to be preset for modulating the synchronization signal and the real data signal are supplied from the cipher/decipher unit 20 or 20', and the numbers to be preset for modulating the ciphered information on the numbers which are determined and ciphered as explained before, are supplied from the carrier bit assignment determining unit 18 or 18'. The signal vector generator 30 may contain a memory to store the preset numbers therein.

The converted QAM vectors Xi, Yi (i=1 to n) are temporarily held in the vector buffer 32.

When the facsimile terminal transmits the training signal as mentioned before, the selector switch 34 selects the training signal (QAM vector) X0, Y0 received at its input A to supply the input to the inverse Fourier transformer 38. In this case, the QAM vector is fixed to the QAM vector X0, Y0 for all the carriers.

When the facsimile terminal transmits the above signals other than the training signal as mentioned before, the selector switch 34 selects the output of the vector buffer 32 received at its input B to supply the input to the inverse Fourier transformer 38.

The inverse Fourier transformer 38 generates a time series of modulated signals for one cycle of the above QAM vectors Xi, Yi (i=1 to n). For example, 512 carriers whose frequencies are equally spaced with intervals of 7.8125Hz are arranged within a transmission band of 0 to 4KHz, where a fundamental frequency is equal to 7.8125Hz and the other 511 carriers are higher harmonic frequencies of the second to 512-th orders, and a time series of 1024 signal points Dj (j=1 to 2n) is generated from the above QAM vectors Xi, Yi (i=1 to n). The time series Dj (j=1 to 2n) is temporarily held in the time series buffer 40, and is converted to an analog signal in the digital to analog converter 42 to obtain a multi-carrier modulated analog signal. When transmitting the training signal, the inverse Fourier transformer 38 generates a time series of modulated signal for one cycle of the above QAM vector X0, Y0 to generate a multi-carrier modulated analog training signal through the time series buffer 40 and the digital to analog converter 42.

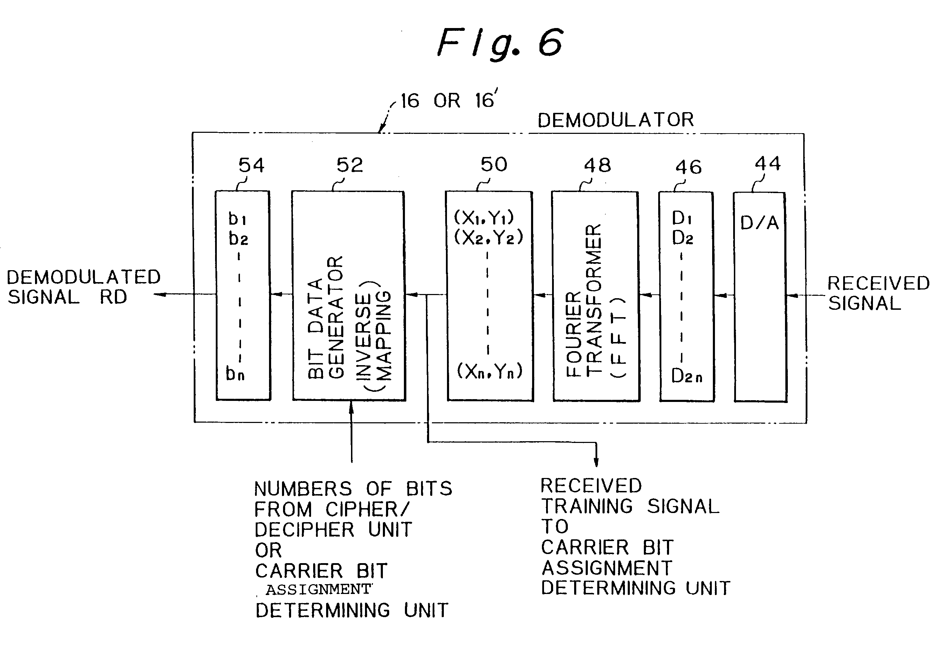

Figure 6 is a block diagram of the demodulator in the system of Fig. 1. In Fig. 6, reference numeral 44 denotes an analog to digital converter, 46 denotes a time series buffer, 48 denotes a Fourier transformer, 50 denotes a vector buffer, 52 denotes a bit data generator, and 54 denotes a data buffer.

The analog to digital converter 44 samples 1024 signal points for one cycle of the Fourier transformation from the above multi-carrier modulated analog signal which is transmitted from the sender side through the analog telephone line, to convert the above multi-carrier modulated analog signal to a digital time series Dj (j=1 to 2n), and the sampled digital time series Dj (j=1 to 2n) is temporarily held in the time series buffer 46. The Fourier transformer 48 transforms the sampled digital time series Dj (j=1 to 2n) into QAM vector components Xi, Yi (i=1 to n). The QAM vector components Xi, Yi (i=1 to n) are temporarily held in the vector buffer 50.

Each of the above QAM vectors Xi, Yi is supplied in turn to the bit data generator 52. The bit data generator 52 contains a plurality of inverse mapping circuits (not shown) respectively corresponding to the possible numbers of the bits which may be assigned to the plurality of carriers. Each of the inverse mapping circuits converts an applied QAM vector (a pair of coordinates) Xi, Yi into a set bi (i=1 to n) of successive bits (derived group of data bits) of the demodulated data signal. One of the plurality of inverse mapping circuits is selected for each of the plurality of carriers, and the conversion is carried out using the selected inverse mapping circuit. For example, when the number of bits of a set (derived group) of the successive bits is equal to two, the inverse mapping circuit having four signal points as its input is used; when the number of bits of a set (derived group) of the successive bits is equal to three, the inverse mapping circuit having 16 signal points as its input is used; when the number of bits of a set (derived group) of the successive bits is equal to four, the inverse mapping circuit having 32 signal points as its input is used; when the number of bits of a set (derived group) of the successive bits is equal to five, the inverse mapping circuit having 64 signal points as its input is used; when the number of bits of a set (derived group) of the successive bits is equal to six, the inverse mapping circuit having 128 signal points as its input is used; and when the number of bits of a set (derived group) of the successive bits is equal to seven, the inverse mapping circuit having 256 signal points as its input is used. The above selection is controlled by a controller (not shown) based on the preset numbers which are assigned to the plurality of carriers. The numbers to be preset for demodulating the synchronization signal and the real data signal are supplied from the cipher/decipher unit 20 or 20', and the numbers to be preset for modulating the ciphered information on the numbers which are determined and ciphered as explained before, are supplied from the carrier bit assignment determining unit 18 or 18'. The bit data generator 52 may contain a memory to store the preset numbers therein.

The converted set (derived group) bi (i=1 to n) of successive bits of the data signal is temporarily held in the data buffer 54, and is output as part of the received data signal.

When the facsimile terminal receives the training signal as mentioned before, the content of the vector buffer 50 is supplied to the carrier bit assignment determining unit 18 or 18'.

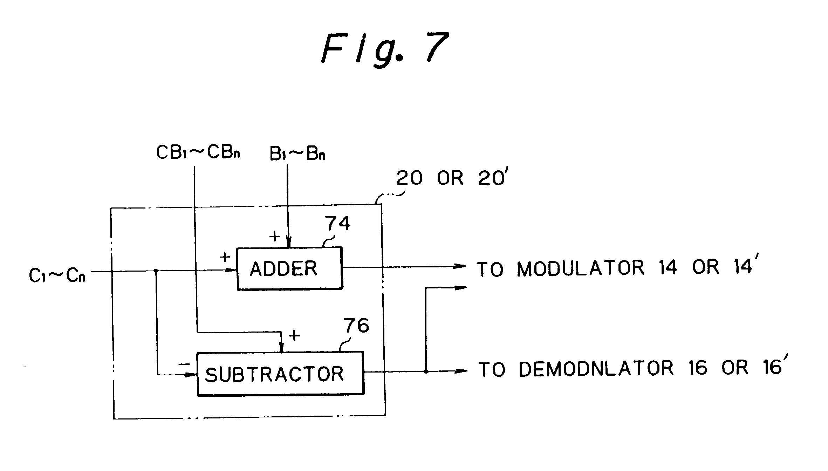

Figure 7 is a block diagram of the cipher/decipher unit 20 or 20' in the system of Fig. 1. In Fig. 7, reference numeral 74 denotes an adder, 76 denotes a subtracter, Bi (i=1 to n) denote the numbers which are assigned respectively to the different carriers, Ci (i=1 to n) denote a set of predetermined numbers which constitute a cipher key, and CBi (i=1 to n) denote a set of ciphered numbers.

In the embodiment of Fig. 7, when receiving a set of numbers Bi (i = 1 to n) which are determined by the carrier bit assignment determining unit 18 or 18', the cipher/decipher unit 20 or 20' ciphers the numbers Bi (i=1 to n) of bits by adding each of the numbers to a corresponding one of a predetermined set of values (Ci (i=1 to n), cipher key) which correspond respectively to the carriers, and the cipher/decipher unit 20 or 20' deciphers ciphered numbers CBi (i=1 to n) bv subtracting from each of the ciphered numbers the corresponding one of the predetermined set of values (Ci (i=1 to n), cipher key) which correspond to the plurality of carriers. The set of values (Ci (i=1 to n), cipher key) are predetermined in advance between the sender side apparatus and the receiver side apparatus. The above addition and the subtraction are carried out in the adder 74 and the subtracter 76. The set of numbers (cipher key) are preset in the adder 74 and the subtracter 76.

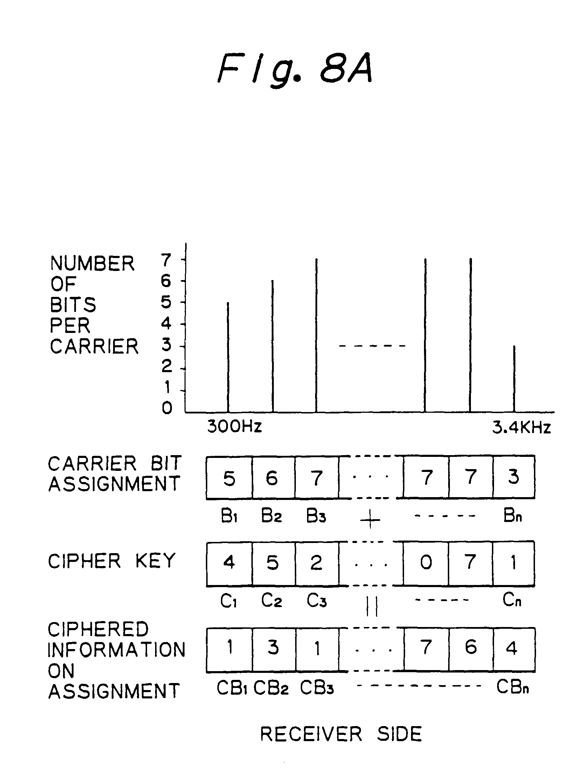

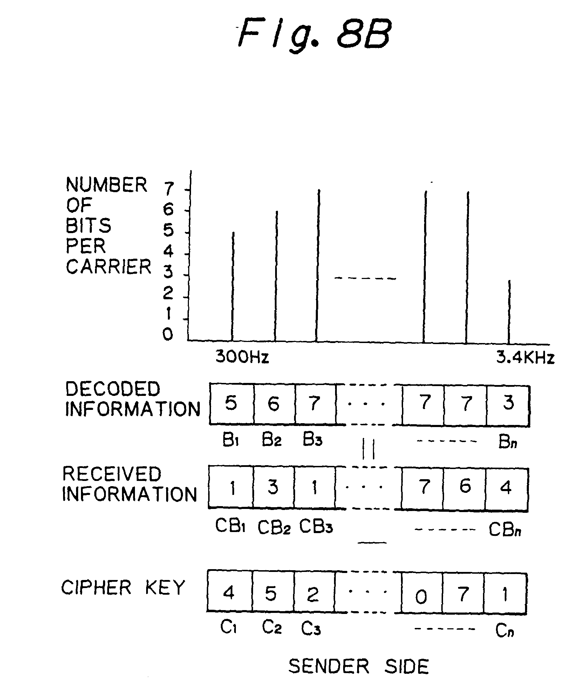

Figure 8A shows an example of the above ciphering operation in the sender side apparatus; and Figure 8B shows an example of the above deciphering operation in the receiver side apparatus. In the example of the Figs. 8A and 8B, the cipher key (Ci (i=1 to n) is predetermined as (4, 5, 2, 0, 7, 1), and the numbers Bi (i=1 to n) which are assigned are (5, 6, 7, ··· 7, 7, 3). According to the above embodiment, since the ciphering and deciphering operations are realized by addition and subtraction, respectively, the operation and the construction are very simple.

In the cipher/decipher unit, the assigned number corresponding to zero value in the set of the cipher key is not ciphered, and when the cipher key (Ci (i=1 to n) is predetermined as (0, 0, 0, 0, 0, 0), the ciphering operation is turned off. When the number of the zero values in the set of the cipher key is increased, the amount of calculation for ciphering and deciphering is reduced.

In addition, the cipher rate can be determined by the number of carriers for which the assigned numbers of bits are ciphered, i.e., the number of non-zero values in the set of values which constitute the cipher key. When each of the assigned numbers is represented by a number of modulo m where m is an integer, and the number of non-zero values in the set of values which constitute the cipher key is denoted by x, the cipher rate is determined as 1/m^{x}. Therefore, the number x should be predetermined so that the above determined is more than a desired value of the cipher rate. For example, when m=8 and x=12, the cipher rate is estimated about 0.15X10⁻¹².

In the above embodiment, the above operations of the carrier bit assignment determining unit 18 or 18' and the aforementioned controller is realized by software on the microcomputer which is generally provided in recent facsimile terminals.

## Claims

1. Communications apparatus including respective transmitter and receiver units (10, 11) connected together by way of a communications link (12) so that digital data can be transmitted from the transmitter unit (10) to the receiver unit (11) when the apparatus is in use, wherein:
the said transmitter unit (10) includes modulation circuitry (14) connected for receiving such data and operable to modulate respective different carrier signals with respective individual groups of data bits, each such group being made up of an individually selected number of bits (B1 to Bn) of the received digital data determined by selectively variable control information stored in the transmitter unit, and to output the modulated carrier signals to one end of the said communications link (12); and
the said receiver unit (11) has an input connected to the other end of the said communications link (12) and includes demodulation circuitry (16') operable to derive, from the said modulated carrier signals, respective groups of data bits, each such derived group being made up of an individually preset number of bits (B1 to Bn) determined by selectively variable control information stored in the receiver unit;
the said transmitter and receiver units (10, 11) being operable in an initialization mode wherein initialization information (CB1 to CBn) is transmitted from one (11) of those units to the other (10), by way of the said communications link (12), to bring the said control information stored in the transmitter unit (10) and the control information stored in the said receiver unit (11) into accordance with one another so as to ensure that the data bit groups derived by the said demodulation circuitry (16') correspond respectively to the said individual groups of data bits;
characterised in that the said one (11) of the transmitter and receiver units includes a ciphering device (20') operable, in accordance with a preselected ciphering key (C1 to Cn) stored in that one unit (11), to modify the said control information (B1 to Bn) stored in that one unit, thereby to produce the said initialization information (CB1 to CBn), and the said other unit (10) includes a deciphering device (20) operable, in accordance with a preselected deciphering key (C1 to Cn) stored therein, to derive from the received initialization information the control information required for that other unit (10).

2. Communications apparatus as claimed in claim 1, wherein the said modulation circuitry (14) and the said demodulation circuitry (16') are adapted to operate in accordance with quadrature amplitude modulation.

3. Communications apparatus as claimed in claim 1 or 2, wherein the said one unit is the said receiver unit (11) and the said other unit is the said transmitter unit (10).

4. Communications apparatus as claimed in claim 3, wherein:
the said modulation circuitry (14) includes training signal generating means (36) for generating a training signal which is used in place of the said received digital data to modulate the said different carrier signals when the transmitter unit (10) is in the said initialization mode; and
the said receiver unit (11) further includes carrier bit assignment means (18') operable, when such a training signal is received from the transmitter unit (10) by way of the said communications link (12) during operation of the receiver unit in the said initialization mode, to evaluate according to quality components of the received training signal that correspond respectively to such different carrier signals, and to employ the results of the evaluation to determine, for each such carrier signal, the number of bits (B1 to Bn) that are to be used by the modulation circuitry (14) in the transmitter unit (10) to form the said individual group of data bits for modulation with the carrier signal concerned.

5. Communications apparatus as claimed in claim 4, wherein the said ciphering device (20') is adapted to cipher the respective determined numbers of bits (B1 to Bn) to produce the said initialization information.

6. Communications apparatus as claimed in claim 4, wherein the said ciphering device (20') is adapted to cipher only preselected ones of the said respective determined numbers of bits (B1 to Bn), such preselection being made so that a desired cipher rate is achieved.

7. Communications apparatus as claimed in any one of claims 4 to 6, wherein, when the said training signal is used to modulate the different carrier signals, the number of bits used by the said modulation circuitry (14) to form each said individual group of data bits is set to a predetermined maximum value.

8. Communications apparatus as claimed in any one of claims 4 to 7, wherein the said ciphering key comprises a set of predetermined values (C1 to Cn) relating respectively to the said carrier signals, and, for each determined number of bits (B1 to Bn) to be ciphered, the said ciphering device (20') adds to the determined number concerned (Bi) that one (Ci) of the said predetermined values (C1 to Cn) of the ciphering key that relates to the carrier signal corresponding to the determined number, thereby to produce the said initialization information (CB1 to CBn);
the said deciphering key also being predetermined in advance so that it corresponds to the said predetermined values (C1 to Cn) of the said ciphering key.

9. A transmitter unit (10) for transmitting digital data via a communications link, including modulation circuitry (14) connected for receiving such data and operable to modulate respective different carrier signals with respective individual groups of data bits, each such group being made up of an individually selected number of bits (B1 to Bn) of the received digital data determined by selectively variable control information stored in the transmitter unit, and to output the modulated carrier signals to one end of the said communications link (12);
the said transmitter unit (10) being operable in an initialization mode wherein initialization information (CB1 to CBn), specifying the number of bits (B1 to Bn) in each such data bit group that is to be used by the modulation circuitry (14) to modulate the carrier signals, is received by the unit, by way of the said communications link (12), and is employed to set the said control information stored in the transmitter unit (10) such that each such data bit group has the specified number of bits (B1 to Bn);
characterised in that the said transmitter unit (10) is operable to receive the said initialization information (CB1 to CBn) from the said communications link in ciphered form and includes a deciphering device (20) operable, in accordance with a preselected deciphering key (C1 to Cn) stored therein, to derive from the received initialization information the said control information required by the unit.

10. A transmitter unit as claimed in claim 9, wherein the said modulation circuitry (14) includes training signal generating means (36) for generating a training signal which is used in place of the received digital data to modulate the said different carrier signals when the transmitter unit (10) is in the said initialization mode.

11. A receiver unit (11) having an input for connection to one end of a communications link (12) to receive a multi-carrier modulated data signal produced by modulating respective different carrier signals with respective individual groups of bits of digital data to be transmitted, each such group being made up of an individually selected number of bits (B1 to Bn) of the digital data;
which receiver unit (11) includes demodulation circuitry (16') operable to derive, from the said modulated carrier signals, respective groups of data bits, each such derived group being made up of an individually preset number of bits (B1 to Bn) determined by selectively variable control information stored in the receiver unit;
the said receiver unit (11) being operable in an initialization mode to transmit initialization information (CB1 to CBn), by way of the said communications link (12), for specifying the number of bits (B1 to Bn) in each such data bit group that is to be used to modulate the carrier signals when producing the said multi-carrier modulated data signal, the specified numbers of bits being in conformity with the said control information stored in the receiver unit so as to ensure that the said derived groups correspond respectively to the data bit groups to be used to modulate the carrier signals;
characterised in that the said receiver unit (11) includes a ciphering device (20') operable, in accordance with a preselected ciphering key (C1 to Cn) stored in that unit (11), to produce the said initialization information (CB1 to CBn) by modifying the said control information stored in that unit, so that the said initialization information is transmitted via the said communications link (12) in ciphered form.

12. A receiver unit as claimed in claim 11, further including carrier bit assignment means (18') operable, when the receiver unit receives a multi-carrier modulated training signal produced by modulating the said different carrier signals using a training signal instead of the digital data to be transmitted, to evaluate according to quality components of the received training signal that correspond respectively to such different carrier signals, and to employ the results of the evaluation to determine, for each such carrier signal, the said number of bits (B1 to Bn) in the said data bit group that is to be used to modulate the carrier signal concerned when producing the said multi-carrier modulated data signal.

## Patentansprüche

1. Kommunikationsvorrichtung mit jeweiligen Sender- und Empfängereinheiten (10, 11), die durch eine Kommunikationsverbindung (12) zusammen verbunden sind, so daß digitale Daten von der Sendereinheit (10) zu der Empfängereinheit (11) übertragen werden können, wenn die Vorrichtung in Gebrauch ist, bei der:
die Sendereinheit (10) eine Modulationsschaltungsanordnung (14) enthält, die zum Empfangen solcher Daten verbunden ist und betriebsfähig ist, um jeweilige verschiedene Trägersignale mit jeweiligen individuellen Gruppen von Datenbits zu modulieren, wobei jede solche Gruppe aus einer individuell gewählten Anzahl von Bits (B1 bis Bn) der empfangenen digitalen Daten gebildet ist, die durch selektiv variable Steuerinformationen bestimmt ist, die in der Sendereinheit gespeichert sind, und um die modulierten Trägersignale an ein Ende der Kommunikationsverbindung (12) auszugeben; und
die Empfängereinheit (11) einen Eingang hat, der mit dem anderen Ende der Kommunikationsverbindung (12) verbunden ist, und eine Demodulationsschaltungsanordnung (16') enthält, die betriebsfähig ist, um aus den modulierten Trägersignalen jeweilige Gruppen von Datenbits abzuleiten, wobei jede solche abgeleitete Gruppe aus einer individuell voreingestellten Anzahl von Bits (B1 bis Bn) gebildet ist, die durch selektiv variable Steuerinformationen bestimmt ist, die in der Empfängereinheit gespeichert sind;
welche Sender- und Empfängereinheiten (10, 11) in einem Initialisierungsmodus betriebsfähig sind, bei dem Initialisierungsinformationen (CB1 bis CBn) von einer (11) jener Einheiten zu der anderen (10) durch die Kommunikationsverbindung (12) übertragen werden, um die Steuerinformationen, die in der Sendereinheit (10) gespeichert sind, und die Steuerinformationen, die in der Empfängereinheit (11) gespeichert sind, miteinander in Übereinstimmung zu bringen, um zu sichern, daß die Datenbitgruppen, die durch die Demodulationsschaltungsanordnung (16') abgeleitet werden, jeweilig den individuellen Gruppen von Datenbits entsprechen;
dadurch gekennzeichnet, daß die eine (11) der Sender- und Empfängereinheiten eine Chiffriervorrichtung (20') enthält, die gemäß einem vorgewählten Chiffrierschlüssel (C1 bis Cn), der in jener einen Einheit (11) gespeichert ist, betriebsfähig ist, um die Steuerinformationen (B1 bis Bn), die in jener einen Einheit gespeichert sind, abzuwandeln, um dadurch die Initialisierungsinformationen (CB1 bis CBn) zu erzeugen, und die andere Einheit (10) eine Dechiffriervorrichtung (20) enthält, die gemäß einem vorgewählten Dechiffrierschlüssel (C1 bis Cn), der in ihr gespeichert ist, betriebsfähig ist, um aus den empfangenen Initialisierungsinformationen die Steuerinformationen abzuleiten, die für jene andere Einheit (10) erforderlich sind.

2. Kommunikationsvorrichtung nach Anspruch 1, bei der die Modulationsschaltungsanordnung (14) und die Demodulationsschaltungsanordnung (16') dafür ausgelegt sind, um gemäß der Quadraturamplitudenmodulation zu arbeiten.

3. Kommunikationsvorrichtung nach Anspruch 1 oder 2, bei der die eine Einheit die Empfängereinheit (11) und die andere Einheit die Sendereinheit (10) ist.

4. Kommunikationsvorrichtung nach Anspruch 3, bei der:
die Modulationsschaltungsanordnung (14) ein Trainingssignalerzeugungsmittel (36) enthält, zum Erzeugen eines Trainingssignals, das anstelle der empfangenen digitalen Daten verwendet wird, um die verschiedenen Trägersignale zu modulieren, wenn die Sendereinheit (10) in dem Initialisierungsmodus ist; und
die Empfängereinheit (11) ferner ein Trägerbitzuordnungsmittel (18') enthält, das betriebsfähig ist, wenn solch ein Trainingssignal von der Sendereinheit (10) durch die Kommunikationsverbindung (12) während der Operation der Empfängereinheit in dem Initialisierungsmodus empfangen wird, um gemäß Qualitätskomponenten des empfangenen Trainingssignals, die jeweilig solchen verschiedenen Trägersignalen entsprechen, eine Bewertung vorzunehmen und die Resultate der Bewertung zu verwenden, um für jedes solche Trägersignal die Anzahl von Bits (B1 bis Bn) zu bestimmen, die durch die Modulationsschaltungsanordnung (14) in der Sendereinheit (10) zu verwenden ist, um die individuelle Gruppe von Datenbits zur Modulation mit dem betreffenden Trägersignal zu bilden.

5. Kommunikationsvorrichtung nach Anspruch 4, bei der die Chiffriervorrichtung (20') dafür ausgelegt ist, um die jeweiligen bestimmten Anzahlen von Bits (B1 bis Bn) zu chiffrieren, um die Initialisierungsinformationen zu erzeugen.

6. Kommunikationsvorrichtung nach Anspruch 4, bei der die Chiffriervorrichtung (20') dafür ausgelegt ist, um nur vorgewählte der jeweiligen bestimmten Anzahlen von Bits (B1 bis Bn) zu chiffrieren, wobei solch eine Vorauswahl erfolgt, daß eine gewünschte Chiffrierrate erreicht wird.

7. Kommunikationsvorrichtung nach irgendeinem der Ansprüche 4 bis 6, bei der, wenn das Trainingssignal verwendet wird, um die verschiedenen Trägersignale zu modulieren, die Anzahl von Bits, die durch die Modulationsschaltungsanordnung (14) verwendet wird, um jede individuelle Gruppe von Datenbits zu bilden, auf einen vorbestimmten maximalen Wert festgelegt ist.

8. Kommunikationsvorrichtung nach irgendeinem der Ansprüche 4 bis 7, bei der der Chiffrierschlüssel einen Satz von vorbestimmten Werten (C1 bis Cn) umfaßt, die jeweilig die Trägersignale betreffen, und die Chiffriervorrichtung (20') für jede bestimmte Anzahl von Bits (B1 bis Bn), die zu chiffrieren ist, zu der bestimmten betreffenden Anzahl (Bi) denjenigen (Ci) der vorbestimmten Werte (C1 bis Cn) des Chiffrierschlüssels addiert, der das Trägersignal betrifft, das der vorbestimmten Anzahl entspricht, um dadurch die Initialisierungsinformationen (CB1 bis CBn) zu erzeugen;
welcher Dechiffrierschlüssel auch im voraus so vorbestimmt ist, daß er den vorbestimmten Werten (C1 bis Cn) des Chiffrierschlüssels entspricht.

9. Sendereinheit (10) zum Senden digitaler Daten über eine Kommunikationsverbindung, die eine Modulationsschaltungsanordnung (14) enthält, die zum Empfangen solcher Daten verbunden ist und betriebsfähig ist, um jeweilige verschiedene Trägersignale mit jeweiligen individuellen Gruppen von Datenbits zu modulieren, wobei jede solche Gruppe aus einer individuell gewählten Anzahl von Bits (B1 bis Bn) der empfangenen digitalen Daten gebildet ist, die durch selektiv variable Steuerinformationen bestimmt ist, die in der Sendereinheit gespeichert sind, und um die modulierten Trägersignale an ein Ende der Kommunikationsverbindung (12) auszugeben;
welche Sendereinheit (10) in einem Initialisierungsmodus betriebsfähig ist, bei dem Initialisierungsinformationen (CB1 bis CBn), die die Anzahl von Bits (B1 bis Bn) in jeder solchen Datenbitgruppe spezifizieren, die durch die Modulationsschaltungsanordnung (14) zu verwenden ist, um die Trägersignale zu modulieren, durch die Einheit über die Kommunikationsverbindung (12) empfangen werden und verwendet werden, um die Steuerinformationen, die in der Sendereinheit (10) gespeichert sind, so festzulegen, daß jede solche Datenbitgruppe die spezifizierte Anzahl von Bits (B1 bis Bn) hat;
dadurch gekennzeichnet, daß die Sendereinheit (10) betriebsfähig ist, um die Initialisierungsinformationen (CB1 bis CBn) von der Kommunikationsverbindung in chiffrierter Form zu empfangen, und eine Dechiffriervorrichtung (20) enthält, die gemäß einem vorgewählten Dechiffrierschlüssel (C1 bis Cn), der in ihr gespeichert ist, betriebsfähig ist, um aus den empfangenen Initialisierungsinformationen die Steuerinformationen, die durch die Einheit gefordert werden, abzuleiten.

10. Sendereinheit nach Anspruch 9, bei der die Modulationsschaltungsanordnung (14) ein Trainingssignalerzeugungs-mittel (36) enthält, zum Erzeugen eines Trainingssignals, das anstelle der empfangenen digitalen Daten verwendet wird, um die verschiedenen Trägersignale zu modulieren, wenn die Sendereinheit (10) in dem Initialisierungsmodus ist.

11. Empfängereinheit (11) mit einem Eingang zur Verbindung mit einem Ende einer Kommunikationsverbindung (12), um ein mehrträgermoduliertes Datensignal zu empfangen, das durch Modulieren jeweiliger verschiedener Trägersignale mit jeweiligen individuellen Gruppen von Bits von digitalen Daten, die zu übertragen sind, erzeugt wurde, wobei jede solche Gruppe aus einer individuell gewählten Anzahl von Bits (B1 bis Bn) der digitalen Daten gebildet ist;
welche Empfängereinheit (11) eine Demodulationsschaltungsanordnung (16') enthält, die betriebsfähig ist, um aus den modulierten Trägersignalen jeweilige Gruppen von Datenbits abzuleiten, wobei jede solche abgeleitete Gruppe aus einer individuell voreingestellten Anzahl von Bits (B1 bis Bn) gebildet ist, die durch selektiv variable Steuerinformationen bestimmt ist, die in der Empfängereinheit gespeichert sind;
welche Empfängereinheit (11) in einem Initialisierungsmodus betriebsfähig ist, um Initialisierungsinformationen (CB1 bis CBn) über die Kommunikationsverbindung (12) zu senden, zum Spezifizieren der Anzahl von Bits (B1 bis Bn) in jeder solchen Datenbitgruppe, die zu verwenden ist, um die Trägersignale zu modulieren, wenn das mehrträgermodulierte Datensignal erzeugt wird, welche spezifizierten Anzahlen von Bits mit den Steuerinformationen übereinstimmen, die in der Empfängereinheit gespeichert sind, um zu sichern, daß die abgeleiteten Gruppen jeweilig den Datenbitgruppen entsprechen, die zu verwenden sind, um die Trägersignale zu modulieren;
dadurch gekennzeichnet, daß die Empfängereinheit (11) eine Chiffriervorrichtung (20') enthält, die gemäß einem vorgewählten Chiffrierschlüssel (C1 bis Cn), der in jener Einheit (11) gespeichert ist, betriebsfähig ist, um die Initialisierungsinformationen (CB1 bis CBn) durch Modifizieren der Steuerinformationen, die in jener Einheit gespeichert sind, zu erzeugen, so daß die Initialisierungsinformationen über die Kommunikationsverbindung (12) in chiffrierter Form übertragen werden.

12. Empfängereinheit nach Anspruch 11, ferner mit einem Trägerbitzuordnungsmittel (18'), das betriebsfähig ist, wenn die Empfängereinheit ein mehrträgermoduliertes Trainingssignal empfängt, das durch Modulieren der verschiedenen Trägersignale unter Verwendung eines Trainingssignals anstelle der zu sendenden digitalen Daten erzeugt wurde, um gemäß Qualitätskomponenten des empfangenen Trainingssignals, die jeweilig solchen verschiedenen Trägersignalen entsprechen, eine Bewertung vorzunehmen und die Resultate der Bewertung zu verwenden, um für jedes solche Trägersignal die Anzahl von Bits (B1 bis Bn) in der Datenbitgruppe zu bestimmen, die zu verwenden ist, um das betreffende Trägersignal zu modulieren, wenn das mehrträgermodulierte Datensignal erzeugt wird.

## Revendications

1. Appareil de communication comprenant des unités émettrice et réceptrice respectives (10, 11) connectées ensemble par l'intermédiaire d'une liaison de communication (12), de façon que des données numériques puissent être transmises de l'unité émettrice (10) à l'unité réceptrice (11) lorsque l'appareil est en cours d'utilisation, dans lequel : l'unité émettrice (10) comprend un circuit de modulation (14) connecté pour recevoir de telles données et capable de moduler différents signaux porteurs respectifs avec des groupes de bits de données individuels respectifs, chacun de ces groupes étant constitué par un nombre de bits (B1 à Bn) des données numériques reçues qui est sélectionné individuellement, ce nombre étant déterminé par une information de commande pouvant varier sélectivement qui est enregistrée dans l'unité émettrice, et d'émettre les signaux porteurs modulés vers une extrémité de la liaison de communication (12); et
l'unité réceptrice (11) a une entrée connectée à l'autre extrémité de la liaison de communication (12) et elle comprend un circuit de démodulation (16') capable d'obtenir, à partir des signaux porteurs modulés, des groupes de bits de données respectifs, chaque groupe obtenu étant constitué par un nombre de bits (B1 à Bn) fixé à l'avance individuellement, qui est déterminé par une information de commande pouvant varier de façon sélective qui est enregistrée dans l'unité réceptrice;
les unités émettrice et réceptrice (10, 11) pouvant fonctionner dans un mode d'initialisation dans lequel une information d'initialisation (CB1 à CBn) est émise par une première (11) de ces unités vers la seconde (10), par l'intermédiaire de la liaison de communication (12), pour mettre en concordance mutuelle l'information de commande qui est enregistrée dans l'unité émettrice (10) et l'information de commande qui est enregistrée dans l'unité réceptrice (11), pour garantir que les groupes de bits de données qui sont obtenus par le circuit de démodulation (16') correspondent respectivement aux groupes de bits de données individuels précités;
caractérisé en ce que la première (11) des unités émettrice et réceptrice comprend un dispositif de cryptage (20') capable de modifier l'information de commande (B1 à Bn) qui est enregistrée dans cette première unité, conformément à une clé de cryptage présélectionnée (C1, Cn) qui est enregistrée dans cette première unité (11), pour produire ainsi l'information d'initialisation (CB1 à CBn), et la seconde unité (10) comprend un dispositif de décryptage (20) capable d'obtenir, à partir de l'information d'initialisation reçue, l'information de commande qui est exigée pour cette seconde unité (10), conformément à une clé de décryptage présélectionnée (C1 à Cn) qui est enregistrée dans le dispositif de décryptage.

2. Appareil de communication selon la revendication 1, dans lequel le circuit de modulation (14) et le circuit de démodulation (16') sont adaptés pour fonctionner conformément à une modulation d'amplitude en quadrature.

3. Appareil de communication selon la revendication 1 ou 2, dans lequel la première unité est l'unité réceptrice (11) et la seconde unité est l'unité émettrice (10).

4. Appareil de communication selon la revendication 3, dans lequel :
le circuit de modulation (14) comprend des moyens de génération de signal d'apprentissage (36) pour générer un signal d'apprentissage qui est utilisé à la place des données numériques reçues, pour moduler les différents signaux porteurs lorsque l'unité émettrice (10) est dans le mode d'initialisation; et
l'unité réceptrice (11) comprend en outre des moyens d'affectation de bits aux signaux porteurs (18') qui, lorsqu'un tel signal d'apprentissage est reçu à partir de l'unité émettrice (10) par l'intermédiaire de la liaison de commutation (12) pendant le fonctionnement de l'unité réceptrice dans le mode d'initialisation, évaluent en ce qui concerne la qualité, des composantes du signal d'apprentissage reçu qui correspondent respectivement à de tels signaux porteurs différents, et utilisent les résultats de l'évaluation pour déterminer, pour chaque signal porteur, le nombre de bits (B1 à Bn) à utiliser par le circuit de modulation (14) dans l'unité émettrice (10) pour former le groupe de bits de données individuel, pour la modulation avec le signal porteur concerné.

5. Appareil de communication selon la revendication 4, dans lequel le dispositif de cryptage (20') est adapté pour crypter les nombres de bits (B1 à Bn) déterminés respectifs, pour produire l'information d'initialisation.

6. Appareil de communication selon la revendication 4, dans lequel le dispositif de cryptage (20') est adapté pour crypter seulement certains présélectionnés des nombres de bits (B1 à Bn) déterminés respectifs, cette présélection étant effectuée de façon à obtenir un taux de cryptage désiré.

7. Appareil de communication selon l'une quelconque des revendications 4 à 6, dans lequel lorsque le signal d'apprentissage est utilisé pour moduler les différents signaux porteurs, le nombre de bits qu'utilise le circuit de modulation (14) pour former chaque groupe de bits de données individuel est fixé à une valeur maximale prédéterminée.

8. Appareil de communication selon l'une quelconque des revendications 4 à 7, dans lequel la clé de cryptage comprend un jeu de valeurs prédéterminés (C1 à Cn) concernant respectivement les signaux porteurs, et, pour chaque nombre de bits déterminé (B1 à Bn) à crypter, le dispositif de cryptage (20') ajoute au nombre déterminé concerné (Bi) celle (Ci) des valeurs prédéterminées (C1 à Cn) de la clé de cryptage qui concerne le signal porteur correspondant au nombre déterminé, pour produire ainsi l'information d'initialisation (CB1 à CBn);
la clé de décryptage étant également prédéterminée à l'avance de façon à correspondre aux valeurs prédéterminées (C1 à Cn) de la clé de cryptage.

9. Une unité émettrice (10) pour émettre des données numériques par l'intermédiaire d'une liaison de communication, comprenant un circuit de modulation (14) connecté pour recevoir de telles données et capable de moduler différents signaux porteurs respectifs avec des groupes de bits de données individuels respectifs, chacun de ces groupes étant constitué par un nombre de bits (B1 à Bn) des données numériques reçues qui est sélectionné individuellement, ce nombre étant déterminé par une information de commande pouvant varier sélectivement qui est enregistrée dans l'unité émettrice, et d'émettre les signaux porteurs modulés vers une extrémité de la liaison de communication (12);
l'unité émettrice (10) pouvant fonctionner dans un mode d'initialisation dans lequel une information d'initialisation (CB1 à CBn), spécifiant le nombre de bits (B1 à Bn) dans chaque groupe de bits de données à utiliser par le circuit de modulation (14) pour moduler les signaux porteurs, est reçue par l'unité, par l'intermédiaire de la liaison de communication (12), et est employée pour fixer l'information de commande qui est enregistrée dans l'unité émettrice (10), de façon que chaque groupe de bits de données ait le nombre de bits (B1 à Bn) spécifié;
caractérisée en ce que l'unité émettrice (10) est capable de recevoir l'information d'initialisation (CB1 à CBn) par la liaison de communication, sous forme cryptée, et elle comprend un dispositif de décryptage (20) capable d'obtenir à partir de l'information d'initialisation reçue l'information de commande qui est exigée par l'unité, conformément à une clé de décryptage présélectionnée (C1 à Cn) qui est enregistrée dans le dispositif de décryptage.

10. Une unité émettrice selon la revendication 9, dans laquelle le circuit de modulation (14) comprend des moyens de génération de signal d'apprentissage (36) pour générer un signal d'apprentissage qui est utilisé à la place des données numériques reçues, pour moduler les différents signaux porteurs lorsque l'unité émettrice (10) est dans le mode d'initialisation.

11. Une unité réceptrice (11) ayant une entrée destinée à être connectée à une extrémité d'une liaison de communication (12), pour recevoir un signal de données modulé à signaux porteurs multiples, qui est produit en modulant différents signaux porteurs respectifs avec des groupes de bits de données numériques individuels respectifs à transmettre, chacun de ces groupes étant constitué par un nombre de bits (B1 à Bn) des données numériques qui est sélectionné individuellement;
cette unité réceptrice (11) comprenant un circuit de démodulation (16') capable d'obtenir, à partir des signaux porteurs modulés, des groupes respectifs de bits de données, chaque groupe obtenu étant constitué par un nombre de bits (B1 à Bn) fixé individuellement, qui est déterminé par une information de commande pouvant varier sélectivement qui est enregistrée dans l'unité réceptrice;
l'unité réceptrice (11) pouvant fonctionner dans un mode d'initialisation pour émettre de l'information d'initialisation (CB1 à CBn), par l'intermédiaire de la liaison de communication (12), pour spécifier le nombre de bits (B1 à Bn) dans chaque groupe de bits de données qui doit être utilisé pour moduler les signaux porteurs au moment de la génération du signal de données modulé avec des signaux porteurs multiples, les nombres de bits spécifiés étant en conformité avec l'information de commande qui est enregistrée dans l'unité réceptrice, pour garantir que les groupes obtenus correspondent respectivement aux groupes de bits de données à utiliser pour moduler les signaux porteurs;
caractérisée en ce que l'unité réceptrice (11) comprend un dispositif de cryptage (20') capable de produire l'information d'initialisation (CB1 à CBn) en modifiant l'information de commande qui est enregistrée dans cette unité, conformément à une clé de cryptage présélectionnée (C1 à Cn) qui est enregistrée dans cette unité (11), de façon que l'information d'initialisation soit transmise par la liaison de communication (12), sous forme cryptée.

12. Une unité réceptrice selon la revendication 11, comprenant en outre des moyens d'affectation de bits aux signaux porteurs (18') qui, lorsque l'unité réceptrice reçoit un signal d'apprentissage modulé à signaux porteurs multiples qui est produit en modulant les différents signaux porteurs en utilisant un signal d'apprentissage à la place des données numériques à transmettre, évaluent, en ce qui concerne la qualité, des composantes du signal d'apprentissage reçu qui correspondent respectivement aux différents signaux porteurs, et utilisent les résultats de l'évaluation pour déterminer, pour chaque signal porteur, le nombre de bits (B1 à Bn) dans le groupe de bits de données qui doit être utilisé pour moduler le signal porteur concerné, au moment de la génération du signal de données modulé avec des signaux porteurs multiples.
